**Europäisches Patentamt**

**European Patent Office**

**Office européen des brevets**

(19)

(11) Veröffentlichungsnummer: **0 082 809**
**B1**

(12) # EUROPÄISCHE PATENTSCHRIFT

(45) Veröffentlichungstag der Patentschrift:
29.04.87

(51) Int. Cl.⁴: **C 02 F 1/24, B 03 D 1/00**

(21) Anmeldenummer: **82810484.4**

(22) Anmeldetag: **11.11.82**

(54) Verfahren zur kontinuierlichen Abscheidung von in einer verunreinigten Flüssigkeit enthaltenen Stoffen und Vorrichtung zur Durchführung des Verfahrens.

(30) Priorität: **18.12.81 CH 8088/81**

(43) Veröffentlichungstag der Anmeldung:
**29.06.83 Patentblatt 83/26**

(45) Bekanntmachung des Hinweises auf die Patenterteilung:
**29.04.87 Patentblatt 87/18**

(84) Benannte Vertragsstaaten:
**AT DE FR GB IT NL SE**

(56) Entgegenhaltungen:
**DE-A-663 960**
**DE-A-1 816 932**
**DE-A-2 327 306**
**FR-A-2 294 754**
**FR-A-2 441 587**
**FR-A-2 448 939**
**US-A-3 860 513**
**US-A-3 959 131**
**US-A-3 975 269**
**US-A-4 094 783**

**Die Akte enthält technische Angaben, die nach dem Eingang der Anmeldung eingereicht wurden und die nicht in dieser Patentschrift enthalten sind.**

(73) Patentinhaber: **Perren, Benno, Austrasse 33, CH-5430 Wettingen (CH)**

(72) Erfinder: **Perren, Benno, Austrasse 33, CH- 5430 Wettingen (CH)**

(74) Vertreter: **Winkler, Kurt, Dr., Mellingerstrasse 69, CH- 5400 Baden (CH)**

## Beschreibung

Die Erfindung betrifft ein Verfahren zur kontinuierlichen Abscheidung von in einer verunreinigten Flüssigkeit enthaltenen Stoffen durch gestaffelte Zugabe von zwei Polyelektrolyten zur Bildung von Flocken, die zur Klärung der Flüssigkeit abgeschieden werden, und eine Vorrichtung zur Durchführung des Verfahrens.

Nahezu alle Wässer aus Industriebetrieben und Garagen weisen Verunreinigungen auf, welche von biologischen Kläranlagen nur ungenügend oder gar nicht gereinigt werden können. Diese Wässer verlassen daher praktisch ungereinigt, nur verdünnt die Kläranlage und belasten demzufolge den Vorfluter. Aus diesem Grunde besteht in den meisten Ländern die Forderung, diese Wässer einer Reinigung zu unterziehen, bevor sie der Kläranlage zufliessen. Auch in der chemischen Industrie fallen Prozessflüssigkeiten an, welche Schadstoffe enthalten, die extrahiert werden müssen, oder auch wertvolle Stoffe, die rückgewonnen werden sollen. Die in den verschiedenen Flüssigkeiten enthaltenen Stoffe können sowohl organischer als auch anorganischer Natur sein, sie können echt gelöst oder als Kolloide, als dispergierte oder emulgierte Teilchen in der Flüssigkeit vorliegen.

Für die Abscheidung der in einer Flüssigkeit enthaltenen Stoffe sind verschiedene Verfahren und Vorrichtungen bekannt.

Nach FR-A-2 441 587 wird zur Abscheidung von in einer verunreinigten Flüssigkeit enthaltenen Stoffen die Flüssigkeit zusammen mit einem Gas und einem Flockungsmittel, z. B. einem Polyelektrolyten, unter Druck gesetzt und nach einer Verweilzeit in einem Behälter am weiteren Strömungswege langsam entspannt. Dabei entstehen Flocken aus den abzuscheidenden Stoffen und den sich bildenden Mikrobläschen, die hochsteigen und abgeschieden werden. - Eine Anpassung der Grösse der Gasbläschen an die jeweiligen Erfordernisse ist bei diesem Verfahren weder vorgesehen noch möglich. Nachteilig ist ferner die lange Prozessdauer bei geringer Durchsatzmenge, beides bedingt durch die kleine Steiggeschwindigkeit der entstehenden Mikroflocken.

Aus US-A-3 959 131 ist es bekannt, dem Abwasser zur Flokulation der Verunreinigungen erst ein Koagulant und gegebenenfalls ein Detergent, nachher elektrolytisch erzeugte Gasbläschen zur Bildung von Mikroflocken beizumischen. Zur Umwandlung in normale Flocken wird anschliessend noch ein Polyelektrolyt zugeführt. - Es werden zwar Angaben über die einzutragende Gasmenge und die Grösse der entstehenden Gasbläschen gemacht, es wird aber nichts darüber ausgesagt, ob und in welcher Weise eine Anpassung der Menge und der Grösse der Gasbläschen im jeweiligen Falle vorgenommen werden soll. Auch wird keine Lehre dafür gegeben, welche Kriterien bei der Wahl des Koagulanten und des Polyelektrolyts zu beachten sind.

In US-A-3 975 269 wird ein ähnliches Verfahren zur Reinigung von Industrie-Abwasser dargelegt, nach welchem die Gasbläschen durch mechanische Mittel in das Abwasser eingebracht werden.

Für die Absonderung von organischen oder metallischen stoffen aus einer wässrigen Flüssigkeit durch Flotation ist aus FR-A-2 448 939 die Beigabe von zwei Polyelektrolyten bekannt, wobei der erste ein kationischer ist und der zweite ein anionischer oder ein kationischer sein kann. Ein anionischer Polyelektrolyt für die erste Beimischung ist nicht vorgesehen und es ist nichts darüber offenbart, nach welchen Gesichtspunkten die Wahl des zweiten Polyeelektrolyts vorzunehmen ist.

Der Erfindung liegt die Aufgabe zugrunde, ein Verfahren für den eingangs genannten Prozess anzugeben, das durch eine physikalischchemische Wirkungsweise zur raschen und verlässlichen Ausflockung der abzuscheidenden Stoffe führt, sowie eine entsprechende Vorrichtung für diesen Zweck zu schaffen.

Diese Aufgabe wird durch die kennzeichnenden Merkmale der Ansprüche 1 bzw. 9 oder 13 gelöst.

Die Wirkungsweise des erfindungsgemässen Verfahrens kann, beispielsweise bei der Reinigung von Schmutzwasser, folgendermassen erklärt werden:

Die Verunreinigungen wie Schmutzteilchen, Ölemulsionen usw. sind im Wasser annähernd gleichmässig verteilt und weisen in der Regel eine negative Ladung auf, z.B. -75 mV. Wegen ihrer Ladung bleiben sie im Wasser in Schwebe. In ein solcherart verschmutztes Wasser wird Luft feinst verteilt eingetragen und mit dem Wasser gleichmässig vermischt. Die Luftblöschen sind von ungefähr gleichen Grössenordnung wie die Schmutzteilchen und weisen damit die annähernd Bleiche, ebenfalls negative Ladung wie die Schmutzteilchen auf. Der Durchmesser der Luftbläschen liegt dabei zwischen 1 und 300 μm. Sind sie zu gross, so sind sie nicht mehr so wirksam und es ist nicht gesichert, dass sie genügend lang in der Schwebe bleiben. Sind sie zu klein, so kommen sie als den Schmutzteilchen äquivalente Ladungsträger nicht mehr in Frage und sind daher wenig wirksam.

Dem derart präparierten Schmutzwasser wird nun ein kationischer Polyelektrolyt beigemischt, der positiv geladene Polyelektrolyt umschliesst die negativ geladenen Luftbläschen und Schmutzteilchen und es bilden sich sogenannte Mikroflocken, die gegen innen elektrisch neutral sind, gegen aussen jedoch als positive Ladungsträger aufscheinen. Für die Bildung der Mikroflocken ist es wesentlich, gemäss der Art und Menge der Verunreinigungen im Schmutzwasser einen geeigneten Polyelektrolyt in entsprechender Dosierung zu wählen. Zufolge der eingeschlossenen Luftbläschen streben die Mikroflocken zur Wasseroberfläche, doch hängt ihre Steiggeschwindigkeit von der Grösse der Luftbläschen ab. Um den Prozess beschleunigen wird ein zweiter, anionischer Polyelektrolyt dem die Mikroflocken enthaltenden Wasser beigemischt. Bedingt durch die gegenpoligen Ladungen der Mikroflocken und des zweiten Polyelektrolyts bilden sich schlagartig Mikroflocken, welche nun rascher zur Wasseroberfläche streben und als Schlamm abgeschieden werden können.

Wegen des schlagartigen Koagulierens der Mikroflocken zu Makroflocken werden auch ladungsneutrale Schmutzteilchen und andere Verunreinrgungen eingeschlossen und abgeschieden, die bei den bekannten-Verfahren bisher nicht entfernt werden konnten.

Damit die Makroflocken flottieren, ist nur eine geringe Gasmenge nötig. Es genügt im allgemeinen ein Minimum von 2 Liter pro m³ Flüssigkeit. Dabei entsteht ein schwerer Schlamm mit einem hohen Flüssigkeitsanteil. Je mehr Gas in die Flüssigkeit eingetragen wird, desto leichter und flockiger wird der Schlamm und dementsprechend weniger Flüssigkeit enthält er. So hat es der Praktiker in der Hand, einerseits durch die Grösse und Dichte der Gasbläschen in der Flüssigkeit, andererseits durch die Wahl der Polyelektrolyten, die Art und Beschaffenheit des anfallenden Schlammes in weiten Grenzen zu variieren und eventuellen Bedürfnissen anzupassen.

Es gibt auch Schmutzteilchen mit positiver Ladung; Kartoffelstärke beispielsweise kann negative oder positive Ladung aufweisen. In solchen Fällen wird als erster Polyelektrolyt ein anionischer und als zweiter Polyelektrolyt ein kationischer in die Flüssigkeit eingebracht.

Das Verfahren kann praktisch an jede Verunreinigungsart angepasst werden, indem unter der Vielzahl von Polyelektrolyten diejenigen ausgewählt werden, die bezüglich Molekulargewicht und Ladungsdichte am geeignetsten sind. Es hat sich gezeigt, dass zur Klärung ölemulsionshaltiger Abwässer gewisse Aminoplaste von kationischem Charakter in der Lage sind, in Gegenwart feinst verteilter Luft die Emulsion zu brechen und grossflockige Agglomerate mit den Ölteilchen zu bilden. Als besonders geeignet haben sich Kondensationsprodukte aus Formaldehyd-Dicyandiamid, Formaldehyd-Dicyandiamid-Äthylendiamin oder auch Formaldehyd-Harnstoff-Dicyandiamid erwiesen.

Für die Bereitstellung der bei diesem Verfahren benötigten Gasbläschen bietet sich naheliegenderweise Luft an, doch kann praktisch jedes beliebige Gas dafür verwendet werden, sofern es nicht giftig ist oder zu schädlichen Reaktionen führt. Die Bildung der Gasbläschen und ihre Verteilung in der Flüssigkeit kann z.B. mit Hilfe einer Zentrifugalpumpe oder eines Ejektors erfolgen. Es kann aber auch ein anderer Weg gewählt werden. Kohlendioxid ($CO_2$) beispielsweise kann in flüssigem Aggregatzustand in die unter entsprechendem Druck stehende verunreinigte Flüssigkeit eingetragen werden, wodurch sich eine sehr gute Durchmischungsmöglichkeit der beiden Flüssigkeiten ergibt. Durch Druckentspannung oder mittels Ultraschall wird das $CO_2$ in Form feinster Bläschen in der zu reinigenden Flüssigkeit freigesetzt.

Die zur Bildung der Gasbläschen benötigte Energie ist verhältnismässig hoch, kann aber durch Beimischung eines Detergents zwecks Entspannung der Flüssigkeit erheblich herabgesetzt werden. Die meisten industriellen, gewerblichen und Haushaltsabwässer enthalten bereits Detergentien und müssen daher nicht zusätzlich entspannt werden.

Das Verfahren erlaubt die Reinigung z.B. von öl- und fettverschmutzten, auch tensidhaltigen Garagen-Abwässern, von Bohr- und Schneidölen aus der Industrie, von latexhaltigen Abwässern usw. und ermöglicht sogar die Aufbereitung von Trinkwasser. Gleicherweise ist es in der chemischen Industrie zur Abscheidung von Schwebestoffen aus verschiedensten Prozessflüssigkeiten anwendbar.

Eine weitere interessante Anwendung des Verfahrens besteht darin, dass einem Salzwasser in einer ersten Phase ein Ionenaustauscherharz in disperser Form beigegeben wird, um anschliessend in einer zweiten Phase das gesättigte Ionenaustauscherhärz nach dem erfindungsgemässen Verfahren aus dem Wasser zu entfernen. - Zur Abscheidung Von Schwermetallen, wie sie beispielsweise in Wässern aus galvanischen Betrieben enthalten sind, hat sich die Beigabe eines durch Vernetzung erzeugten hochmolekularen Eiweisstoffes in einer ersten Phase sehr bewährt. In einer zweiten Phase werden dann, ähnlich wie im vorhergehenden Beispiel, die gesättigten Eiweisstoffe und die übrigen Verunreinigungen nach dem erfindungsgemässen Verfahren aus dem Wasser entfernt.

**Beispiel**

Zur Reinigung eines industriellen Abwassers mit einem Gehalt von 1000 ppm Kohlenwasserstoffen in dispergierter Form und mit einem hohen Anteil an Schwebstoffen, schlammartigen Beimengungen und Schwermetallen, werden pro 1 m³ Wasser 0,6 Liter eines kationischen Polyelektrolyts und 90 Liter Luft eingetragen. Hierauf wird die Luft mit Hilfe einer Zentrifugalpumpe im Wasser feinst verteilt, und anschliessend werden 0,6 Liter eines anionischen Polyelektrolyts eingetragen Es bildet sich ein leichter, flockiger Schlamm, der gut flottiert und in einfacher Weise abgeschieden werden kann. - Es sei vermerkt, dass noch eine einwandfreie, für Kläranlagen zulässige Wasserqualität erzielt werden kann, wenn die Konzentration der Polyelektrolyten um ± 50% geändert wird.

Nachstehend werden Ausführungsbeispiele der Erfindung anhand der beiliegenden Zeichnung näher erläutert. Es zeigen:

Fig.1 eine Vorrichtung mit einer Zentrifugalpumpe zur Feinstverteilung des eingetragenen Gases in der Flüssigkeit;

Fig.2 eine Vorrichtung mit einem Ejektor zur Eintragung feinstverteilten Gases in die Flüssigkeit;

Fig.3 eine Variante der Vorrichtung nach Fig.2 mit Zuführung eines verflüssigten Gases.

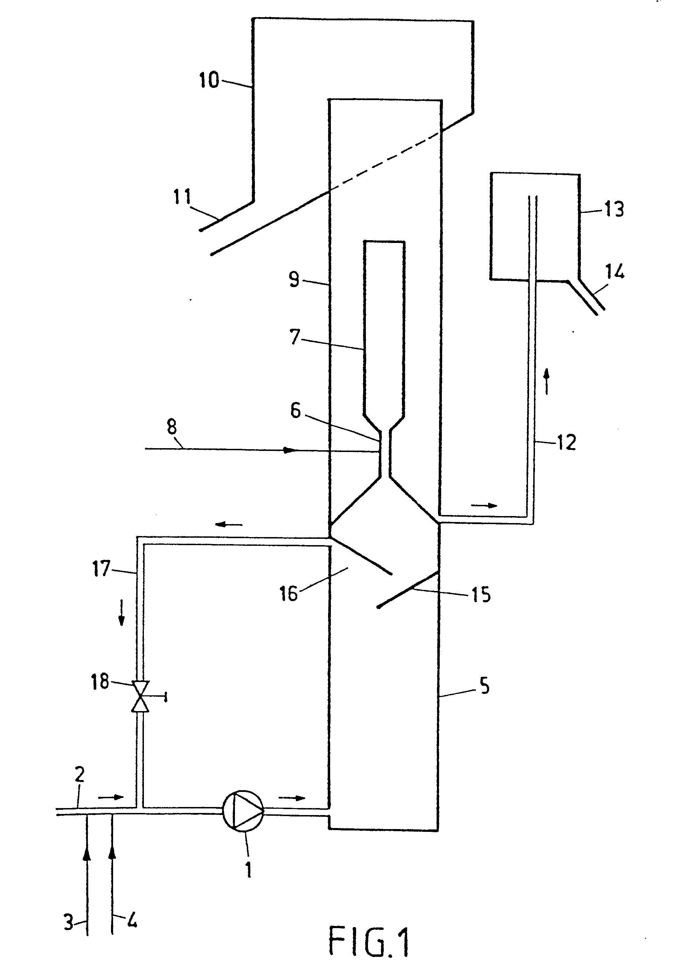

Nach Fig.1 wird die verunreinigte Flüssigkeit von der Zentrifugalpumpe 1 durch die Zulaufleitung 2 angesaugt und weitergefördert. Am Strömungswege zur Pumpe wird durch die Zuführleitung 3 der erste Polyelektrolyt und durch die Zuführleitung 4 ein Gas in die Flüssigkeit eingebracht. Die Reihenfolge, in der die beiden Medien beigemischt werden, ist dabei ohne Bedeutung, sie kann auch umgekehrt sein. Beim Durchströmen der Zentrifugalpumpe wird das Gas in der Flüssigkeit feinst verteilt und zufolge der Turbulenz in der Strömung mit dem Polyelektrolyten gut vermischt, wodurch sich, wie weiter oben beschrieben, Mikroflocken bilden. Die derart vorpräparierte Flüssigkeit strömt in die Kammer 5, wo sich die Verteilung der Beimengungen in der Flüssigkeit homogenisieren kann.

Aus der Kammer 5 gelangt die Flüssigkeit mit den darin enthaltenen Mikroflocken durch die Verbindungsleitung 6 in das als Beruhigungsteil wirkende innere Rohr 7. Beim Austritt aus dem Rohr 7 wird die Flüssigkeit vom äusseren Rohr 9 aufgefangen, welches als Abscheider dient und für diesen Zweck das innere Rohr 7 um ein Stück überragt. Durch die zweimalige Querschnittserweiterung beruhigt sich die Strömung und die Flocken steigen nach oben. Sobald diese schlammartige Ansammlung den oberen Rand des Rohres 9 übersteigt, wird sie vom Sammler 10 aufgefangen und fliesst durch den Ablauf 11 ab.

Die solcherart geklärte, nun saubere Flüssigkeit strömt zwischen dem inneren Rohr 7 und dem äusseren Rohr 9 nach unten, steigt in der Ablaufleitung 12 hoch und tritt in den Sammler 13 aus, von wo sie durch den Auslauf 14 abgeleitet wird.

Um zu verhindern, dass eventuell noch vorhandene grössere Gasblasen zufolge ihrer hohen Auftriebskraft die Strömung im inneren Rohr 7 und im äusseren Rohr 9 stören, kann in der Kammer 5 der durch die Einbauten 15 entstandene Sammelraum 16 vorgesehen werden. Die Einbauten sind, in Strömungsrichtung gesehen, einander überdeckend, damit die Gasblasen nicht von der Stromung zur Verbindungsleitung 6 mitgeführt werden. Das gesammelte Gas kann in die Atmosphäre abgelassen werden, es ist aber zweckmässiger, die Rückführleitung 17 vorzusehen, welche vom Sammelraum 16 zur Zulaufleitung 2 führt, in diese aber vor der Pumpe 1 einmündet. Die Rückführung eines Teils der Flüssigkeit hat den zusätzlichen Vorteil, dass das Gas und der erste Polyelektrolyt bereits vor der Pumpe besser durchmischt werden. Durch das Drosselventil 18 in der Rücklaufleitung 17 wird die Menge der im Kreislauf rückgeführten Flüssigkeit geregelt. Prinzipiell ist es auch möglich, den ersten Polyelektrolyt und das Gas in die Rücklaufleitung 17 einzuführen.

Der Flüssigkeit wird in der Verbindungsleitung 6 durch die Zuführleitung 8 ein zweiter Polyelektrolyt beigemischt der hinsichtlich des ersten eine entgegengesetzte Ladung aufweist, wodurch sich, wie ebenfalls schon beschrieben, schlagartig Makroflocken bilden, welche aus den in der Flüssigkeit enthaltenen Schmutzteilchen, aus Gas und aus den beiden Polyelektrolyten bestehen.

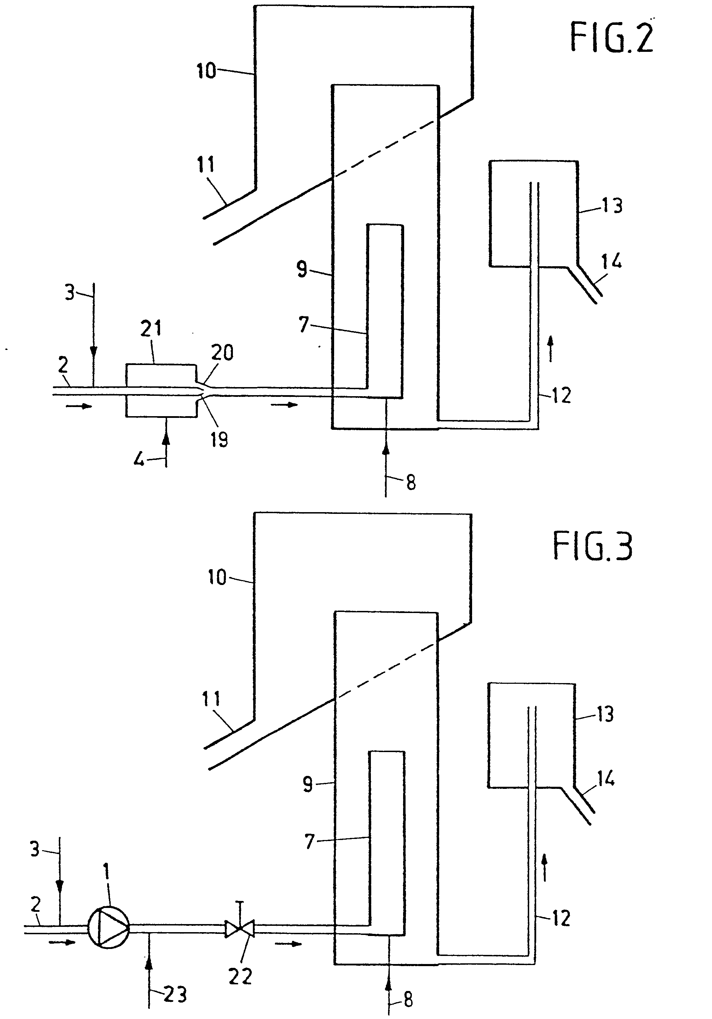

Die Fig.2 zeigt eine andere Möglichkeit, wie das Gas in der Flüssigkeit feinst verteilt werden kann. Die Zulaufleitung 2 ist unterbrochen, das ausmündende Ende des einen Teils ist zur Düse 19 verengt, die in das trichterförmig erweiterte Ende 20 des anderen Teils hineinragt. Es entsteht so ein Ejektor, dessen Wirkung darin besteht, dass der scharfe Flüssigkeitsstrahl das ihn umgebende Gas mitreisst und zufolge der herrschenden Turbulenz feinst verteilt. Das Gas kann Luft aus der Atmosphäre sein, es kann aber auch ein beliebiges anderes Gas sein, das durch die Leitung 4 der Ummantelung 21 des Ejektors 19/20 zugeführt wird. Der zweite Polyelektrolyt wird hier durch die Zuführleitung 8 direkt in den Beruhigungsteil 7 nahe der Einmündung der Zulaufleitung 2 eingebracht.

In Fig.3 ist die Verwendung eines verflüssigten Gases, z.B. von Kohlendioxid ($CO_2$), veranschaulicht. Damit es in diesem Aggregatzustand bleibt, muss es unter dem entsprechenden Druck stehen. Um den sich bietenden Vorteil, nämlich die gute Durchmischungsmöglichkeit von zwei Flüssigkeiten voll ausnützen zu können, muss auch die verunreinigte Flüssigkeit auf den Druck des verflüssigten Gases gebracht werden. Dies geschieht dadurch, dass nach der Pumpe 1 das Drosselventil 22 in der Zulaufleitung 2 angeordnet ist. Das verflüssigte $CO_2$ wird durch die Zuführleitung 23 in die Zulaufleitung 2 zwischen der Pumpe 1 und dem Ventil 22 eingebracht. Die Durchmischung erfolgt in der turbulenten Strömung nach der Pumpe. Bei der Druckentspannung hinter dem Ventil 22 bilden sich feinste, in der zu reinigenden Flüssigkeit praktisch homogen verteilte Gasbläschen.

Es sei noch vermerkt, dass die beschriebenen Vorrichtungen auch in Verbindung mit einem eine Opferanode aufweisenden Elektrolyse-Aggregat verwendet werden können. Der Effekt der Mikroflockenbildung kann dadurch verstärkt werden.

## Patentansprüche

1. Verfahren zur kontinuierlichen Abscheidung von in einer verunreinigten Flüssigkeit enthaltenen Stoffen durch gestaffelte Zugabe von zwei Polyelektrolyten zur Bildung von Flocken, die zur Klärung der Flüssigkeit abgeschieden werden, dadurch gekennzeichnet, dass in die verunreinigte Flüssigkeit zwecks Bildung von Mikroflocken der erste Polyelektrolyt und, wie an sich bekannt, ein Gas eingetragen werden, letzteres dispers in Form von Gasbläschen von zumindest annähernd gleicher Grössenordnung wie die in der Flüssigkeit enthaltenen, abzuscheidenden Stoffe und zumindest annähernd homogen in der Flüssigkeit verteilt wird, anschliessend der zweite Polyelektrolyt mit einer hinsichtlich des ersten entgegengesetzten Ladung der Flüssigkeit beigemischt wird, und die dadurch entstandenen, flottierenden Makroflocken abgeschieden werden.

2. Verfahren nach Anspruch 1, dadurch gekennzeichnet, dass die Gasbläschen in der verunreinigten Flüssigkeit aus Luft bestehen.

3. Verfahren nach Anspruch 1, dadurch gekennzeichnet, dass die Gasbläschen in der verunreinigten Flüssigkeit aus Kohlendioxid ($CO_2$) bestehen.

4. Verfahren nach Anspruch 3, dadurch gekennzeichnet, dass das $CO_2$ im flüssigen Aggregatzustand der verunreinigten Flüssigkeit zugeführt wird.

5. Verfahren nach Anspruch 1, dadurch gekennzeichnet, dass pro $m^3$ Flüssigkeit mindestens 2 Liter Gas zugeführt werden.

6. Verfahren nach Anspruch 1, dadurch gekennzeichnet, dass der verunreinigten Flüssigkeit vor der Durchmischung mit den Gasbläschen ein Detergent beigemischt wird.

7. Verfahren nach Anspruch 1, dadurch gekennzeichnet, dass der Strömung eine mit Gasbläschen und dem ersten Polyelektrolyten angereicherte Flüssigkeitsmenge entnommen und im Kreislauf in die zuströmende, verunreinigte Flüssigkeit rückgeführt wird.

8. Verfahren nach Anspruch 7, dadurch gekennzeichnet, dass die Wenge der rückgeführten Flüssigkeit geregelt wird.

9. Vorrichtung zur Durchführung des Verfahrens nach Anspruch 1, gekennzeichnet durch eine Zulaufleitung (2) für die verunreinigte Flüssigkeit, eine Zuführleitung (3) für den ersten Polyelektrolyt und eine Zuführleitung (4, 23) für das Gas in die Flüssigkeit, durch eine Zentrifugalpumpe (1) in der Zulaufleitung (2), durch eine knapp vor einem oder direkt in einen von der Flüssigkeit durchströmten Beruhigungsteil (7) einmündende Zuführleitung (8) für den zweiten Polyelektrolyt, einen Abscheider (9) für die Abscheidung der entstandenen Makroflocken und eine Ablaufleitung (12) für die geklärte Flüssigkeit.

10. Vorrichtung nach Anspruch 9, gekennzeichnet durch einen Sammelraum (16), welcher im Strömungsweg der Flüssigkeit vor dem Beruhigungsteil (7) angeordnet ist.

11. Vorrichtung nach Anspruch 10, gekennzeichnet durch eine Rücklaufleitung (17) aus den Sammelraum (16) in die Zulaufleitung (2).

12. Vorrichtung nach Anspruch 11, gekennzeichnet durch ein Drosselventil (18) in der Rücklaufleitung (17) zur Mengenregelung der im Kreislauf rückgeführten Flüssigkeit.

13. Vorrichtung zur Durchführung des Verfahrens nach Anspruch 1, gekennzeichnet durch eine Zulaufleitung (2) für die verunreinigte Flüssigkeit, eine Zuführleitung (3) für den ersten Polyelektrolyt und eine Zuführleitung (4) für das Gas in die Flüssigkeit, durch einen Ejektor (19/20) in der Zulaufleitung (2), durch eine knapp vor einem oder direkt in einen von der Flüssigkeit durchströmten Beruhigungsteil (7) einmündende Zuführleitung (8) für den zweiten Polyelektrolyt, einen Abscheider (9) für die Abscheidung der entstandenen Makroflocken und eine Ablaufleitung (12) für die geklärte Flüssigkeit.

14. Verwendung der Vorrichtung nach einem der Ansprüche 9 oder 13 in Verbindung mit einem eine Opferanode aufweisenden Elektrolyse-Aggregat.

## Claims

1. Process for continuously separating off substances present in a contaminated liquid by the staggered addition of two polyelectrolytes for the formation of flocks, which are deposited in order to clarify the liquid, characterized in that, in order to form microflocks, the first polyelectrolyte and, as known per se, a gas are introduced into the contaminated liquid, the gas being dispersed in the form of gas bubbles of at least approximately the same size as the substances which are present in the liquid and have to be separated off, and being distributed at least approximately homogeneously in the liquid, the second polyelectrolyte, which has a charge opposite to that of the first, is then mixed with the liquid, and the floating macroflocks thus formed are deposited.

2. Process according to Claim 1, characterized in that the gas bubbles in the contaminated liquid consist of air.

3. Process according to Claim 1, characterized in that the gas bubbles in the contaminated liquid consist of carbon dioxide ($CO_2$).

4. Process according to Claim 3, characterized in that the $CO_2$ is fed in the liquid state to the contaminated liquid.

5. Process according to Claim 1, characterized in that at least 2 litres of gas are fed in per $m^3$ of liquid.

6. Process according to Claim 1, characterized in that a detergent is mixed with the contaminated liquid before mixing with the gas bubbles is effected.

7. Process according to Claim 1, characterized in that an amount of liquid enriched with gas bubbles and with the first polyelectrolyte is removed from the flow and is recycled into the inflowing, contaminated liquid.

8. Process according to Claim 7, characterized in that the amount of recycled liquid is controlled.

9. Apparatus for carrying out the process according to Claim 1, characterized by an inlet line (2) for the contaminated liquid, a feed line (3) for the first polyelectrolyte and a feed line (4, 23) for feeding the gas into the liquid, by a centrifugal pump (1) in the inlet line (2), and by a feed line (8) for the second polyelectrolyte, which feed line discharges just upstream of or directly into, a calming section (7) through which the liquid flows, a separator (9) for depositing the resulting macroflocks, and a discharge line (12) for the clarified liquid.

10. Apparatus according to Claim 9, characterized by a collection space (16) which is arranged in the flow pat of the liquid, upstream of the calming section (7).

11. Apparatus according to Claim 10, characterized by a recycle line (17) from the collection space (16) to the inlet line (2).

12. Apparatus according to Claim 11, characterized by a flow-control valve (18) in the recycle line (17) for controlling the amount of liquid recycled.

13. Apparatus for carrying out the process according to Claim 1, characterized by an inlet line (2) for the contaminated liquid, a feedline (3) for the first polyelectrolyte and a feed line (4) for feeding the gas into the liquid, by an ejector (19/20) in the inlet line (2), and by a feed line (8) for the second polyelectrolyte, which feed line discharges just upstream of or directly into, a calming section (7) through which the liquid flows, a separator (9) for depositing the resulting macroflocks, and a discharge line (12) for the clarified liquid.

14. Use of the apparatus according to one of Claims 9 or 13 in conjunction with an electrolysis unit having a sacrificial anode.

**Revendications**

1. Procédé pour la séparation continue de substances contenues dans un liquide souillé, par addition échelonnée de deux polyélectrolytes pour la formation de flocons qui sont ensuite séparée pour la clarification du liquide, caractérisé en ce que, dans le liquide souillé, en vue de la formation de microflocons, le premier polyélectrolyte et un gaz connu en soi sont introduits, que le gaz est divisé et dispersé dans le liquide sous la forme de petites bulles de gaz dont l'ordre de grandeur est égale au moins approximativement, à celui des substances à séparer contenues dans le liquide; que le gaz est réparti uniformément, au moins approximativement, dans le liquide; qu'immédiatement après, le deuxième polyélectrolyte, avec une charge opposée à celle du premier polyélectrolyte, est mélangé avec le liquides et que les macroflocons flottants qui en résultent sont ensuite séparés.

2. Procédé selon la revendication 1, caractérisé en ce que les bulles de gaz dans le liquide souillé sont des bulles d'air.

3. Procédé selon la revendication 1, caractérisé en ce que les bulles de gaz dans le liquide souillé sont des bulles d'anhydride carbonique ($CO_2$).

4. Procédé selon la revendication 3, caractérisé en ce que l'anhydride carbonique est amené à l'état physique liquide au liquide souillé.

5. Procédé selon la revendication 1, caractérisé en ce que, par mètre cube de liquide, au moins 2 litres de gaz sont amenés.

6. Procédé selon la revendication 1, caractérisé en ce qu'un détergent est ajouté au liquide souillé avant de le mélanger avec les bulles de gaz.

7. Procédé selon la revendication 1, caractérisé en ce qu'une quantité de liquide enrichie de bulles de gaz et du premier polyélectrolyte est prélevée sur l'écoulement et ramenée, en formant un circuit, au liquide souillé affluent.

8. Procédé selon la revendication 7, caractérisé en ce que la quantité de liquide ramenée est réglée.

9. Dispositif pour la mise en oeuvre du procédé selon la revendication 1, caractérisé en ce qu'il comporte une conduite d'amenée (2) pour le liquide souillé, une conduite d'amenée (3) pour le premier polyélectrolyte et une conduite d'amenée (4, 23) pour le gaz introduit dans le liquide, une pompe centrifuge (1) dans la conduite d'amenée du liquide souillé (2), une conduite d'amenée (8) pour le deuxième polyélectrolyte débouchant juste devant ou directement dans une chambre de tranquilisation (7) traversée par le liquide, un séparateur (9) pour la séparation des macroflocons qui se forment, et une conduite d'écoulement (12) pour le liquide éclairci.

10. Dispositif selon la revendication 9, caractérisé en ce qu'il comporte un espace collecteur (16) disposé sur le chemin d'écoulement du liquide, avant la chambre de tranquilisation (7).

11. Dispositif selon la revendication 10, caractérisé en ce qu'il comporte une conduite de retour (17) de l'espace collecteur (16) à la conduite d'amenée du liquide souillé (2).

12. Dispositif selon la revendication 11, caractérisé en ce qu'il comporte un robinet de réglage (18) dans la conduite de retour (17) pour le réglage de la quantité de liquide ramenée dans le circuit.

13. Dispositif pour la mise en oeuvre du procédé selon la revendication 1, caractérisé en ce qu'il comporte une conduite d'amenée (2) pour le liquide souillé, une conduite d'amenée (5) pour le premier polyélectrolyte et une conduite d'amenée (4) pour le gaz introduit dans le liquide, un éjecteur (19/20) dans la conduite d'amenée (2), une conduite d'amenée (8) pour le deuxième polyélectrolyte débouchant juste avant ou directement dans une chambre de tranquilisation (7) traversée par le liquide, un séparateur (9) pour la séparation des macroflocons qui se forment, et une conduite d'écoulement (12) pour le liquide éclairci.

14. Utilisation du dispositif selon l'une des revendications 9 ou 13 en liaison avec un ensemble d'électrolyse comportant une anode consommable.

FIG.1

FIG.2

FIG.3